(19) **Europäisches Patentamt**

**European Patent Office**

**Office européen des brevets**

(11) **EP 1 447 588 B1**

(12) **FASCICULE DE BREVET EUROPEEN**

(45) Date de publication et mention
de la délivrance du brevet:
**01.02.2006 Bulletin 2006/05**

(51) Int Cl.:
***F16F 7/01*** *(2006.01)* ***B64C 27/00*** *(2006.01)*

(21) Numéro de dépôt: **04009401.3**

(22) Date de dépôt: **09.04.2001**

(54) **Système de supension d'une boite de transmission**

Aufhängungssystem für Getriebe

Suspension system for gearbox

(84) Etats contractants désignés:
**BE DE ES FR GB IT**

(30) Priorité: **12.04.2000 FR 0004680**

(43) Date de publication de la demande:
**18.08.2004 Bulletin 2004/34**

(62) Numéro(s) de document de la (des) demande(s)
initiale(s) en application de l'article 76 CBE:
**01921522.7 / 1 185 801**

(73) Titulaires:
• **EUROCOPTER**
**13725 Marignane Cédex (FR)**
• **Ateca**
**82000 Montauban (FR)**

(72) Inventeurs:
• **Dussac, Marc**
**13140 Miramas (FR)**
• **Vie, Philippe**
**31100 Toulouse (FR)**
• **Delverdier, Osmin**
**31380 Saint Jean Lherm (FR)**

(74) Mandataire: **Renaud-Goud, Thierry**
**GPI & Associes**
**EuroParc de Pichaury**
**1330, rue Guillibert de la Lauzière, Bât D1**
**13856 Aix-en-Provence Cédex 3 (FR)**

(56) Documents cités:
**EP-A- 0 499 526** **WO-A-85/05425**
**WO-A-99/48951** **GB-A- 1 280 301**
**GB-A- 1 293 391** **US-A- 2 417 347**
**US-A- 3 417 660** **US-A- 4 974 794**

• **PATENT ABSTRACTS OF JAPAN vol. 012, no. 229
(M-714), 29 juin 1988 (1988-06-29) & JP 63 026444
A (ORII:KK), 4 février 1988 (1988-02-04)**

EP 1 447 588 B1

**Description**

La présente invention concerne une structure d'amortissement, ainsi que des applications d'une telle structure d'amortissement.

Une application préférée concerna l'utilisation de la structure d'amortissement pour amortir des vibrations de pièces vibrantes, telles que la botte de transmission principale, d'un aéronef à voilure tournante, en particulier un hélicoptère, dans le but notamment de réduire le bruit dans le poste de pilotage et/ou dans la cabine des passagers dudit aéronef.

On sait que, sur un aéronef à voilure tournante, les spectres acoustiques définis dans le domaine compris entre 20 Hz et 20 kHz relèvent de la superposition de bruits d'origines différentes, susceptibles d'être rassemblés en deux groupes différents selon leurs caractéristiques spectrales, à savoir les sons purs ou bruits de raies et les bruits à large bande.

De façon connue, les sons purs ou bruits de raies apparaissent notamment, le cas échéant :

- aux fréquences caractéristiques de la chaîne cinématique de l'aéronef;
- aux fréquences de rotation des pales des rotors (principal et arrière) et aux harmoniques de ces fréquences ;
- aux fréquences de rotation des pales des compresseurs des groupes turbomoteurs ; et/ou
- aux fréquences de rotation des pales des ventilateurs de refroidissement de la boîte de transmission principale ou de distribution d'air en cabine et/ou d'équipements électriques, ainsi qu'aux harmoniques de ces fréquences, tandis que les bruits à large bande comprennent notamment le cas échéant :

- le bruit de couche limite se développant sur le fuselage ;
- le bruit engendré par les rotors ;
- le bruit d'écoulement des entrées d'air et des tuyères ;
- le bruit de moteur ; et/ou
- le bruit des circuits de climatisation ou de chauffage du poste de pilotage ou de la cabine des passagers.

Tous ces bruits sont bien entendu gênants pour les pilotes et les passagers.

Il existe différentes solutions connues pour réduire de tels bruits à l'intérieur d'un aéronef à voilure tournante, notamment un hélicoptère.

Une première solution connue a pour objet de réduire le niveau vibratoire ou le rayonnement de sources de bruit et/ou du fuselage. A cet effet, diverses actions physiques peuvent être mises en oeuvre, notamment :

- une réduction des vibrations de la structure et/ou d'organes mécaniques, par amortissement ou modification de la raideur ou de la masse ;
- une atténuation de la transmission acoustique, par amortissement ou modification de la raideur ou dé la masse ;
- un effet de double cloison, par un espace rempli ou non par un matériau absorbant entre la structure rayonnante et des panneaux insonorisants ;
- une absorption acoustique par des matériaux fibreux ou alvéolaires ; et
- une absorption acoustique par des résonateurs d'Helmhotz.

Les quatre premières actions physiques précitées permettent de diminuer le niveau général du bruit dans un large domaine de fréquences, mais elles entraînent une augmentation de masse importante et très désavantageuse. De plus, la diminution du bruit obtenue alors n'est pas assez sélective pour faire disparaître la gêne acoustique spécifique à l'émergence des sons purs.

En revanche, la cinquième et dernière action physique précitée permet de réduire efficacement le bruit de raies, mais toutefois uniquement dans une bande étroite de fréquences, définie à la conception.

Cette première solution précitée et basée sur un traitement passif du bruit n'est donc pas totalement efficace, notamment pour les bruits de raies engendrés par des excitations vibratoires.

Une seconde solution connue préconise de créer des insonorisations passives sous forme de panneaux d'habillage montés dans le poste de pilotage ou dans la cabine des passagers. Ces panneaux sont conçus en fonction de la zone structurale à traiter et du spectre de fréquences à atténuer.

Toutefois, cette seconde solution présente également de nombreux inconvénients et notamment :

- une réduction de bruit limitée surtout en basses fréquences ;
- une augmentation de masse élevée, qui peut être de plusieurs centaines de kilogrammes pour un hélicoptère de grande taille ;
- une perte de volume non négligeable, notamment lors de l'utilisation de panneaux épais en vue d'augmenter l'effet d'absorption acoustique ; et

- des fuites acoustiques, en particulier au niveau des trous de câblage et des joints entre les panneaux.

Par conséquent, aucune de ces deux solutions connues et précitées n'est satisfaisante pour réduire la gêne occasionnée par les bruits, notamment les bruits de raies.

Un des buts de la présente invention est de proposer une solution permettant de réduire de tels bruits.

Le document US-A-4 974 794 montre un système de suspension selon le préambule de la revendication 1.

La présente invention concerne un système de suspension d'une boîte de transmission d'un aéronef à voilure tournante, notamment d'un hélicoptères, qui comprend une pluralité de barres de suspension.

L'invention propose un système de suspension selon la revendication 1.

Ainsi, on augmente l'amortissement équivalent d'au moins l'une desdites barres, ce qui permet de réduire efficacement, dans le poste de pilotage et/ou la cabine des passagers de l'aéronef, le bruit d'origine solidienne qui est transmis par lesdites barres traitées.

Ainsi, lorsque ladite structure est soumise à des vibrations, ces vibrations sont transmises aux corps solides (en contact) de l'agrégat, par l'intermédiaire des différents points de contact. Au passage de chacun de ces points de contact, une partie de l'énergie vibratoire est dissipée par friction de sorte que lesdites vibrations sont ainsi amorties de façon rapide et efficace dans ladite structure.

De préférence, ladite structure est allongée, par exemple sous forme d'une barre, et ledit évidement interne est formé longitudinalement à l'intérieur de ladite structure allongée.

Dans le cadre de la présente invention, lesdits corps solides, qui sont par exemple réalisés en matière synthétique, de préférence des billes, peuvent être :

- soit pleins, toute leur masse étant alors occupée par de la matière ;
- soit creux, ce qui permet de réduire le poids desdits corps solides et donc également le poids de la structure.

De plus, selon l'invention, lesdits corps solides peuvent être réalisés dans des matériaux différents (matière synthétique, métal, ...) et/ou présenter des formes et/ou des tailles (diamètres) différentes.

On notera que :

- une différence d'inertie desdits corps solides, due notamment à des tailles ou des densités différentes ; et/ou
- une différence de raideur desdits corps solides, due notamment à des matériaux différents (par exemple une matière peu rigide et intrinsèquement très amortissante ou une matière plus rigide et intrinsèquement moins amortissante),

entraînent un mouvement différent sous l'effet d'une excitation vibratoire et donc également une amplitude d'amortissement différente. Par conséquent, par un choix approprié de ces caractéristiques, on peut régler et optimiser l'amortissement mis en oeuvre par la structure d'amortissement conforme à l'invention.

Par ailleurs, avantageusement, ladite structure comporte, de plus, au moins une cloison interne, pleine ou percée, de forme quelconque, notamment tubulaire, qui est solidaire ou non de la paroi de ladite structure et qui est agencée à l'intérieur dudit évidement interne.

Ceci permet d'augmenter la surface d'échange (frottement) entre la structure et l'agrégat et donc également l'amortissement des vibrations.

En outre, de façon avantageuse :

- ledit agrégat comprend de plus un liquide visqueux remplissant les espaces entre lesdits corps solides ; et/ou
- lesdits moyens pour fermer ledit évidement interne comportent une plaque rigide qui est contrainte par un élément élastique.

En plus des avantages précités, la structure d'amortissement conforme à l'invention présente également les avantages suivants :

- elle peut être facilement réalisée et présente un coût de fabrication faible, notamment lorsque l'évidement interne existe déjà dans la structure ;
- elle présente une masse réduite (notamment lorsque l'on utilise des corps solides creux) par rapport à certains moyens d'amortissement connus, tels que le collage de matériaux viscoélastiques; contraints ou non, sur la surface de la structure à amortir ;
- l'agrégat qu'elle comporte est protégé contre des agressions externes (feu, humidité, agents corrosifs, ... ) par le structure elle-même;
- elle est efficace sur une large bande de fréquences et ceci pour différente types de déformation (flexion, traction-compression, torsion, ...) de la structure ;

- elle n'est pas soumise à des phénomènes d'abrasion, de corrosion ou d'érosion, et on choisit un couple approprié de matériaux respectivement pour la paroi de la structure et l'agrégat ; et
- elle n'entraîne aucune modification de la durée de vie des piéces, auxquelles elle est associée.

Les figures du dessin annexé feront bien comprendre comment l'invention peut être réalisée. Sur ces figures, des références identiques désignent des éléments semblables.

La figure 1 montre schématiquement une structure d'amortissement conforme à l'invention.

Les figures 2 et 3 montrent des structures conformes à l'invention comprenant différents types de corps solides.

Les figures 4 à 7 et 8 à 11 montrent, de façon schématique, différents modes de réalisation de cloisons internes de la structure conforme à l'invention, respectivement en vue longitudinale et en vue en plan.

La figure 12 illustre schématiquement une décomposition mécanique de la structure conforme à l'invention.

La figure 13 montre une application préférée de la structure conforme à l'invention, relative à la suspension de la boîte de transmission principale d'un hélicoptère.

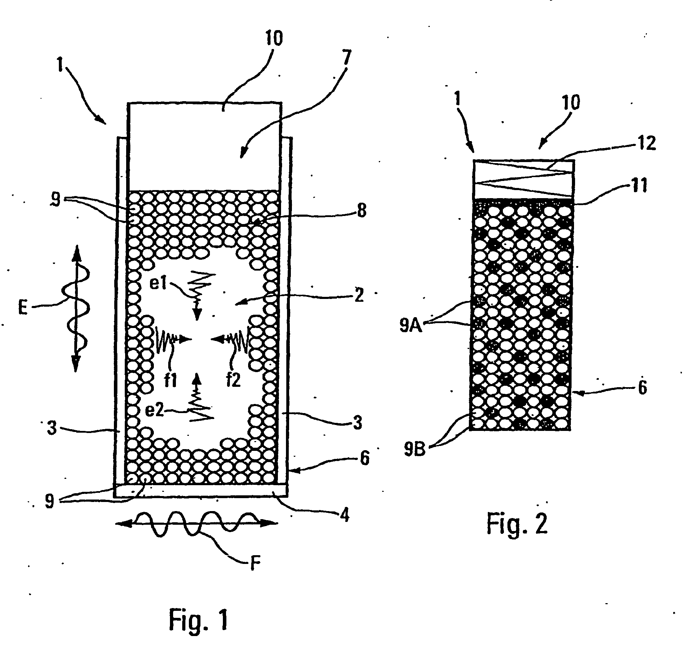

La structure d'amortissement 1 conforme à l'invention et représentée schématiquement sur la figure 1 est un élément mécanique précisé ci-dessous qui, selon l'invention, présente un évidement interne 2, entouré par des parois 3, 4 formant une enceinte 6 et débouchant par une ouverture 7.

Selon l'invention, ladite structure 1 comporte :

- un agrégat 8 qui comprend des corps solides 9 en contact et qui remplit complètement ledit évidement interne 2, bien que pour des raisons de simplification du dessin, on n'ait pas représenté les corps solides 9 dans toute l'enceinte 6 sur la figure 1 ; et
- des moyens 10 pour fermer l'évidement interne 2 et presser ledit agrégat 8 dans ledit évidement interne 2, contre lesdites parois 3 et 4.

Ainsi, lorsque la structure 1 est soumise à des vibrations, par exemple des vibrations longitudinales E ou des vibrations latérales F, ces vibrations sont transmises par les parois 3 et 4 aux corps solides 9 (en contact) de l'agrégat 8 qui est pressé, par l'intermédiaire des différents points de contact. Au passage de chacun de ces points de contact, une partie de l'énergie vibratoire est dissipée par friction de sorte que lesdites vibrations sont ainsi amorties de façon rapide et efficace dans ladite structure 1, comme cela est représenté sur la figure 1 avec des amortissements e1 et e2 pour les vibrations longitudinales E et des amortissements f1 et f2 pour les vibrations latérales F.

Bien entendu, la structure 1 peut présenter différentes formes, plus ou moins massives. De préférence, toutefois, elle présente une forme allongée, à la manière d'une barre par exemple, et ledit évidement interne 2 est formé longitudinalement à ladite structure 1 à l'intérieur d'une enceinte 6 tubulaire, comme représenté sur la figure 1.

Dans le cadre de la présente invention, lesdits corps solides 9, qui sont réalisés par exemple en matière synthétique, de préférence des billes, peuvent être :

- soit pleins, toute leur masse étant alors occupée par de la matière ;
- soit creux, ce qui permet de réduire le poids desdits corps solides 9 et donc également le poids de la structure 1.

De plus, selon l'invention, lesdits corps solides 9 :

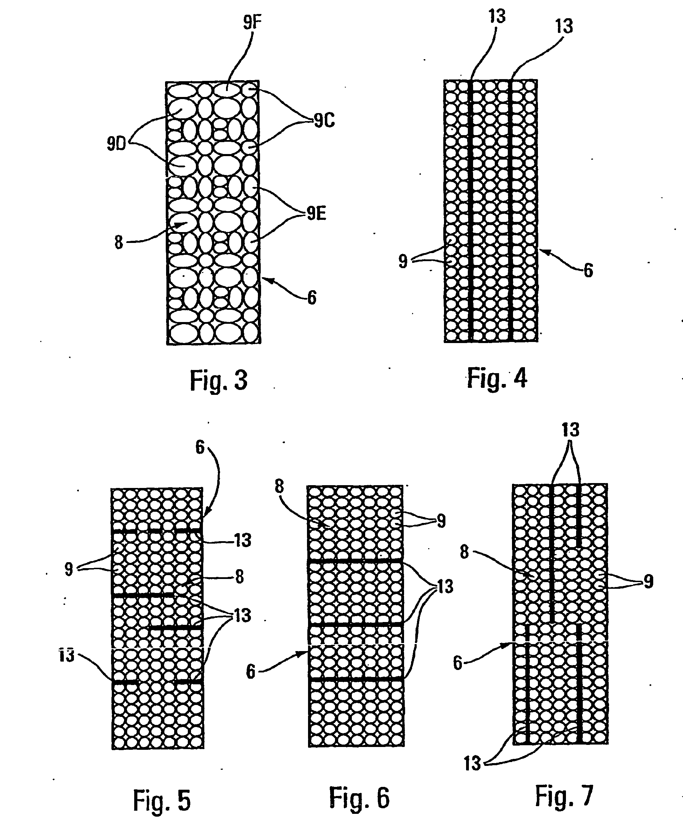

- peuvent être réalisés dans des matériaux différents (polymère, céramique métallique, élastomère ...), comme cela est représenté sur la figure 2 montrant des corps solides 9A et 9B de forme et de taille identiques, mais réalisés dans des matériaux différents ; et/ou
- peuvent présenter des formes et/ou des tailles (diamètres) différentes, comme représenté sur la figure 3, notamment pour des corps 9C, 9D, 9E et 9F.

On notera que :

- une différence d'inertie des corps solides 9A à 9F, due notamment à des tailles ou des densités différentes ; et/ou
- une différence de raideur des corps solides 9A et 9B, due notamment à des matériaux différents (par exemple une matière peu rigide et intrinsèquement très amortissante ou une matière plus rigide et intrinsèquement moins amortissante),

entraînent un mouvement différent sous l'effet d'une excitation vibratoire et donc également une amplitude d'amortissement différente. Par conséquent, par un choix approprié de ces caractéristiques, on peut régler et optimiser l'amortissement mis en oeuvre par la structure 1.

En plus desdits corps solides 9, pleins ou creux, l'agrégat 8 peut également comporter un liquide visqueux, par exemple de l'huile, remplissant les espaces libres dans l'enceinte 6 entre lesdits corps solides 9. Ces derniers sont alors noyés dans un milieu lubrifiant, ce qui permet de retarder un éventuel échauffement.

Par ailleurs, dans un mode de réalisation préféré représenté sur la figure 2, les moyens 10 comportent :

- une plaque rigide 11, par exemple une plaque métallique, qui est adaptée à l'ouverture 7 de manière à pouvoir fermer, de préférence de façon étanche, l'enceinte 6 ; et
- un moyen élastique 12, de préférence un ressort, qui exerce une pression élastique sur ladite plaque rigide 11 de manière à contraindre l'agrégat 8, c'est-à-dire à le presser dans l'enceinte 6, et même éventuellement à le comprimer s'il comporte une quantité réduite de liquide ou si les corps solides 9 sont peu rigides.

Par ailleurs, la structure d'amortissement 1 conforme à l'invention comporte, de plus, au moins une cloison interne 13, qui est solidaire d'une paroi 3 ou 4 de l'enceinte 6 de la structure 1 et qui est agencée à l'intérieur de l'évidement 2.

A titre d'illustration, on a représenté différents exemples de cloisons 13 :

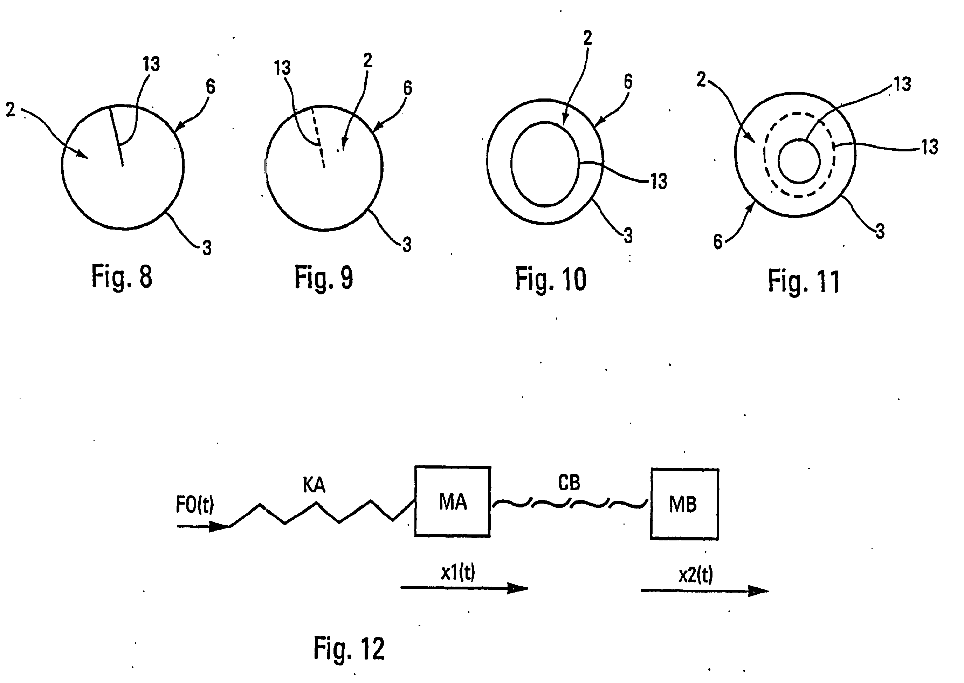

- dans une vue en coupe longitudinale schématique, sur les figures 4 à 7 ; et
- dans une vue en plan, sur les figures 8 à 11.

Comme on peut le voir sur ces figures 4 à 11, les cloisons 13 :

- peuvent être pleines (figures 4, 5, 6, 7, 8, 10 et 11) ou percées (figures 5, 9 et 11) ; et
- peuvent présenter des formes quelconques, par exemple planes (figures 4 à 9) ou tubulaires (figures 10 et 11). Dans ce dernier cas, les cloisons 13 peuvent présenter tout type de section transversale : circulaire, elliptique ou simplement quelconque.

Ces cloisons internes 13 permettent d'augmenter la surface d'échange et donc la surface de frottement entre, d'une part, les faces internes des parois 3, 4 de l'enceinte 6 et, d'autre part, l'agrégat 8, ce qui permet d'accroître l'amortissement des vibrations de la structure 1.

En plus des avantages précités, la structure 1 conforme à l'invention présente également les avantages suivants :

- elle peut être facilement réalisée et présente un coût de fabrication faible, notamment lorsque l'évidement interne 2 existe déjà dans la structure 1 ;
- elle présente une masse réduite (notamment lorsque l'on utilise des corps solides 9 creux) par rapport à certains moyens d'amortissement connus, tels que des matériaux amortissants collés directement sur la surface de la structure à amortir ;
- l'agrégat 8 qu'elle comporte est protégé contre des agressions externes (feu, humidité, agents corrosifs, ...) par l'enceinte 6 ;
- elle est efficace sur une large bande de fréquences et ceci pour différents types de déformation (flexion, traction-compression, torsion, ...) de la structure 1 ;
- elle n'est pas soumise à des phénomènes d'abrasion, de corrosion ou d'érosion, si on choisit un couple approprié de matériaux respectivement pour la paroi 3, 4 de la structure 1 et pour l'agrégat 8 ; et
- elle n'entraîne aucune modification de la durée de vie des pièces, auxquelles elle est associée.

On précise ci-après, en référence à la figure 12, l'effet physique du remplissage (de l'évidement 2 par l'agrégat 8) sur le comportement vibratoire d'une structure 1 initialement creuse (évidement 2 existant, mais vide).

Trois modes différents de sollicitation des structures creuses 1 peuvent être traités par le remplissage par un agrégat 8, à savoir :

- la flexion ;
- la traction-compression ; et
- la torsion.

On considère la réponse vibratoire d'une structure creuse 1 comme la superposition linéaire de réponses de systèmes du second ordre, caractérisés chacun par une fréquence propre, un amortissement modal, une masse modale et une raideur modale.

A une fréquence donnée, on peut remplacer la structure 1 et l'ensemble de l'agrégat 8 par les deux systèmes couplés représentés sur la figure 12, dans lesquels :

- MA et KA représentent respectivement la masse modale et la raideur modale réelle de la structure 1 non traitée sollicitée en flexion, longitudinal ou torsion ;
- MB représente la masse équivalente dé l'agrégat 8, mise en mouvement par le couplage avec la structure 1 creuse sollicitée en flexion, longitudinal ou torsion ; et
- CB traduit le frottement interne apporté par l'agrégat 8.

Le remplissage de l'évidement 2 modifie la réponse vibratoire de la structure 1, mais ne modifie pas la force d'excitation FO provenant de l'excitation en amont (carter, par exemple, pour la boîte de transmission principale d'un hélicoptère).

En régime harmonique, les déplacements respectifs au cours du temps x1(t) et x2(t), les vitesses respectives v1(t) et v2(t) et les accélérations respectives $\gamma$1(t) et $\gamma$2(t) vérifient pour une fréquence angulaire $\omega$ quelconque de la force d'excitation d'amplitude F, avec F0(t) = F($\omega$).sin($\omega$t) :

$$v1(t) = j\omega\, x1(t) \quad et \quad v(2)t = j\omega\, x2(t)$$

$$\gamma1(t) = -\omega^2\, x1(t) \quad et \quad \gamma2 = -\omega^2\, x2(t).$$

La somme des forces appliquées (forces de rappel, force de frottement due au couplage avec l'autre masse, et éventuellement force extérieure FO) à chaque masse étant égale à sa force inertielle, s'écrit donc pour chaque masse :

- en fonction du temps $\underline{t}$ :

  • pour la masse MA : FO(t) -KA x1(t) - CB (v1(t)-v2(t)) = MA $\gamma$1(t)
  • pour la masse MB : O - CB (v2(t)-v1 (t)) = MB $\gamma$2(t)

- en fonction de la fréquence angulaire $\omega$ :

  • pour la masse MA : F($\omega$)-KAX1($\omega$)-CBj$\omega$(X1($\omega$)-X2($\omega$)) = -MA $\omega^2$X1($\omega$)
  • pour la masse MB: 0-CBj$\omega$(X2($\omega$)-X1($\omega$)) = -MB $\omega^2$X2($\omega$) avec j$^2$=-1 et X1($\omega$) et X2($\omega$) des quantités complexes.

A partir de là, il est facile de déterminer (en considérant la fréquence f en Hz) le spectre de l'amplitude accélération/force et le spectre de déphasage de l'accélération par rapport à la force, accessibles par la mesure (avec f = $\omega/2\pi$ et fA = $\omega$A/$2\pi$, fA et $\omega$A étant respectivement la fréquence propre et la pulsation propre de la structure A (structure 1 non remplie)).

On en déduit que l'effet du remplissage (agrégat 8) de l'enceinte 6 sur le comportement vibratoire de la structure 1 se traduit par :

- une forte diminution du maximum de la réponse en amplitude (définissant la fréquence de résonance du système amorti) ;
- un glissement relativement important du maximum de la réponse en amplitude vers les basses fréquences ;
- un élargissement important du spectre de réponse en amplitude ; et
- un aplatissement important de la courbe de réponse en phase.

Par ailleurs, le coefficient CB peut être exprimé théoriquement au voisinage du mode propre $\omega$A par :

$$CB = \alpha B\; 2\Pi fA\; mB\; tg(\delta B)$$

avec :

- αB : un coefficient sans dimension qui traduit l'efficacité réelle du remplissage ;
- δB : un angle de perte intrinsèque du matériau de remplissage, connu au préalable ; et
- mB : la masse physique apportée par le remplissage (agrégat 8).

On vérifie donc que :

- plus l'angle de perte du matériau est élevé, plus l'amortissement équivalent est important ;
- l'amortissement équivalent est proportionnel à mB ; et
- plus la qualité du contact est élevée, meilleure est l'efficacité en amortissement du remplissage (agrégat 8).

L'optimisation de l'amortissement consiste à augmenter CB, c'est-à-dire la masse amortissante de l'agrégat 8, qui est définie par $\alpha B \, mB \, tg(\delta B)$.

Les paramètres technologiques permettant d'augmenter cette masse amortissante sont :

- pour l'angle de perte δB :

  • le nombre de types de corps solides 9 utilisés (un seul type ou un mélange de plusieurs types) ;
  • la nature des constituants : polymère, céramique métallique ou élastomère;
  • la viscosité du liquide de remplissage éventuellement utilisé,

- pour le coefficient d'efficacité αB :

  • l'état de surface des corps solides 9 constituant l'agrégat 8 ;
  • la pression statique de compactage engendré par les moyens 10,

- pour la masse de remplissage mB :

  • la masse volumique moyenne des corps solides 9 constituant l'agrégat 8 ;
  • le diamètre moyen des corps solides 9 constituant l'agrégat 8 ;
  • l'épaisseur de paroi des corps solides 9 constituant l'agrégat 8, si ceux-ci sont creux.

De nombreuses applications sont bien entendu possibles pour la structure d'amortissement 1 conforme à l'invention.

En particulier, ladite structure 1 peut être utilisée pour amortir les vibrations de divers types de pièces vibrantes. Elle peut, ainsi, notamment être employée comme partie :

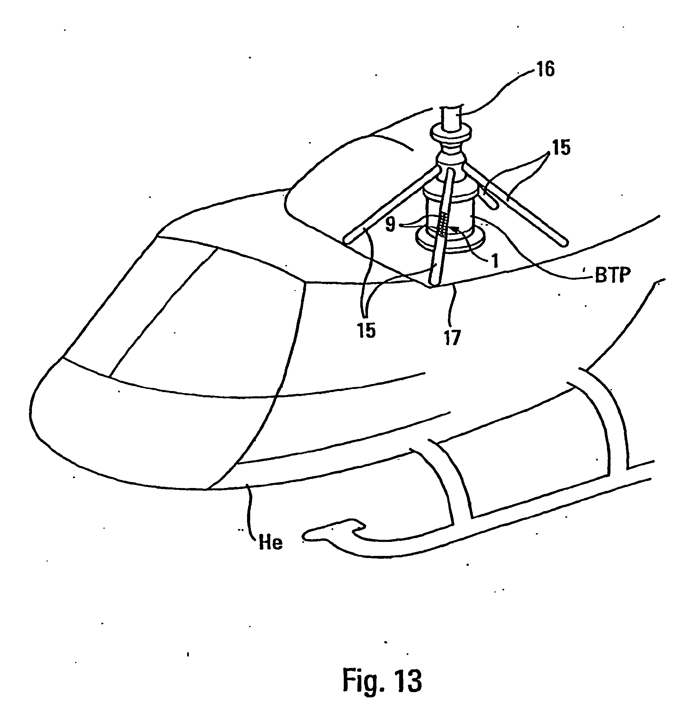

- d'une barre de liaison entre un support à isoler par rapport à des vibrations et un carter englobant des éléments tournants engendrant ces vibrations, comme on le verra plus en détail ci-après en référence à la figure 13 ; ou
- d'une suspension de moteur, de boîte de vitesses ou d'un organe tournant, tel qu'un compresseur ou un ventilateur par exemple.

Selon l'invention, pour réaliser la suspension d'une pièce vibrante par rapport à un support de manière à isoler ce dernier des vibrations de ladite pièce vibrante, une ou plusieurs structures 1, notamment sous forme de barre, peuvent :

- être rapportées et agencées à des endroits libres entre la pièce vibrante et le support ; ou
- remplacer des éléments, par exemple des bielles, existant déjà sur la pièce ou le support ; ou
- être formées dans des éléments (creux ou non) existant déjà.

Les deux dernières solutions présentent de plus l'avantage de ne pas augmenter l'encombrement.

Des applications préférées de la structure d'amortissement 1 concernent la réduction de vibrations génératrices de bruit, sur un aéronef à voilure tournante, notamment un hélicoptère, et en particulier la réduction :

- du bruit d'engrènement ou de roulement provenant des boîtes de transmission ; et/ou
- du bruit d'engrènement ou de roulement de boîtiers accessoires (pompes de lubrification, entraînement de groupes de ventilation, climatisation ...),

bruits qui sont très gênants en cabine, à la fois pour les pilotes et les passagers.

L'application particulière de l'invention, représentée sur la figure 13, a pour objet d'accroître l'amortissement de barres de suspension 15 d'un système de suspension de la boîte de transmission principale BTP (reliée au mât 16 du rotor d'avance et de sustentation) d'un hélicoptère He, barres de suspension 15 qui sont agencées sur le fuselage 17 de l'hélicoptère He.

Pour ce faire, ces barres de suspension 15 comportent ehacune une structure d'amortissement 1 conforme à l'invention, comme on peut le voir pour l'une de ces barres 15 qui est partiellement arrachée sur la figure 13.

Ceci est réalisé dans le but de réduire en cabine le bruit d'origine solidienne transmis par les barres 15, c'est-à-dire l'énergie vibratoire transmise par lesdites barres 15, traduite par une expression $|H(f)|\,|\gamma barre|^2(f)$ précisée ci-dessous.

De façon générale, on peut considérer que le spectre de pression acoustique dans la cabine de l'hélicoptère He, noté Pcab(f), vérifie la relation quadratique suivante :

$$Pcab^2(f) = \left|T(f)\right|\left|Pdirect\right|^2(f) + \left|H(f)\right|\left|\gamma barre\right|^2(f) + \left|Q(f)\right|\left|\gamma structure\right|^2(f)$$

En effet, cette sommation d'amplitudes au carré traduit le -bilan des transferts énergétiques pour le bruit d'engrènement aux fréquences supérieures à 500 Hz. Il n'y a pas lieu de prendre en compte les relations de phase entre pression en cabine et pression directe ou accélérations de la structure (fuselage) de l'hélicoptère He, compte tenu du grand nombre de modes acoustiques présents en cabine à ces fréquences.

On notera que :

- le terme $|T(f)||Pdirect|^2$ (f) représente la pression acoustique quadratique en cabine, due uniquement au bruit rayonné directement par la boîte de transmission principale BTP de l'hélicoptère He. $|T(f)|$ représente le module du coefficient de transmission acoustique (sans dimension) du bruit rayonné par voie aérienne d'amplitude Pdirect jusqu'à la cabine ;
- le terme $|H(f)||\gamma barre|^2$ (f) représente la pression acoustique en cabine, due uniquement au bruit rayonné en cabine par la structure (partie de fuselage 17) excitée par les vibrations des attaches des barres 15. $|H(f)|$ représente l'efficacité de rayonnement acoustique en cabine des vibrations de cette partie du fuselage ;
- le terme $|Q(f)|\,|\gamma structure|^2(f)$ représente la pression acoustique quadratique en cabine, due uniquement au bruit rayonné en cabine par le reste du fuselage qui n'est pas excité par les vibrations des attaches des barres 15, mais par le fond de la boîte de transmission BTP par exemple. $|Q(f)|$ représente le module du coefficient de rayonnement acoustique en cabine de cette dernière partie de fuselage.

De ce qui précède, il apparaît que la réduction du bruit en cabine sera significative aux fréquences d'engrènement, pour lesquelles la relation suivante est vérifiée en l'absence de traitement :

$$\left|H(f)\right|\left|\gamma barre\right|^2(f) \rangle\rangle \left|T(f)\right|\left|Pdirect\right|^2(f) + \left|Q(f)\right|\left|\gamma structure\right|^2(f).$$

## Revendications

1. Système de suspension d'une boîte de transmission d'un aéronef à voilure tournante, notamment un hélicoptère, ledit système de suspension comprenant une pluralité de barres de suspension (15), dans lequel au moins l'une desdites barres de suspension (15) comporte une structure d'amortissement (1) présentant un évidement interne (2) et des moyens (10, 11) pour fermer ledit évidement interne (2), système **caractérisé en ce que** la structure comporte un agrégat (8) qui comprend au moins des corps solides (9) creux en contact et qui remplit ledit évidement interne (2).

2. Système de suspension selon la revendication 1, dans lequel ledit agrégat remplit complètement l'évidement (2).

3. Système de suspension selon la revendication 1 ou 2. dans lequel ladite structure d'amortissement comporte des parois (3, 4) formant une enceinte (6) rigide et débouchant par une ouverture (7).

4. Système de suspension selon l'une des revendications précédentes, dans lequel ledit agrégat comporte des billes de matière synthétique.

**5.** Système de suspension selon l'une des revendications précédentes,
dans lequel ladite structure (1) est allongée et dans lequel ledit évidement interne (2) est formé longitudinalement à l'intérieur de ladite structure allongée (1).

**6.** Système de suspension selon l'une quelconque des revendications précédentes,
dans lequel ladite structure d'amortissement (1) comporte de plus un moyen élastique (12) qui exerce une pression de manière à contraindre ledit agrégat (8).

**7.** Système de suspension selon la revendication 6,
dans lequel le moyen élastique (12) exerce une pression sur une plaque rigide (11) fermant l'évidement (2).

**8.** Système de suspension selon l'une quelconque des revendications précédentes,
dans lequel ledit agrégat (8) comporte des corps solides (9A, 9B) réalisés dans des matériaux différents.

**9.** Système de suspension selon l'une quelconque des revendications précédentes,
dans lequel ledit agrégat (8) comporte des corps solides (9C, 9D. 9E, 9F) présentant des formes différentes.

**10.** Système de suspension selon l'une quelconque des revendications précédentes,
dans lequel ledit agrégat (8) comporte des corps solides (9C, 9D, 9E, 9F) présentant des tailles différentes.

**11.** Système de suspension selon l'une quelconque des revendications précédentes,
qui comporte de plus au moins une cloison interne (13) qui est agencée à l'intérieur dudit évidement interne (2).

**12.** Système de suspension selon la revendication 11,
dans lequel ladite cloison interne (13) présente une forme tubulaire.

**13.** Système de suspension selon l'une des revendications 11 ou 12,
dans lequel ladite cloison interne (13) est au moins partiellement pleine.

**14.** Système de suspension selon l'une des revendications 11 à 13,
dans lequel ladite cloison interne (13) est au moins partiellement percée.

**15.** Système de suspension selon l'une quelconque des revendications précédentes,
dans lequel ledit agrégat (8) comprend de plus un liquide visqueux remplissant les espaces entre lesdits corps solides (9).

**Claims**

**1.** A system of suspension for a gearbox of a rotor aircraft, in particular a helicopter, the said system of suspension comprising a plurality of suspension rods (15), in which at least one of the said suspension rods (15) includes a damping structure (1) having an inner cavity (2) and means (10, 11) for closing the said inner cavity (2), the system being **characterised in that** the structure includes an aggregate (8) which comprises at least hollow firm bodies (9) in contact with one another and which fills the said inner cavity (2).

**2.** A system of suspension according to Claim 1, in which the said aggregate completely fills the cavity (2).

**3.** A system of suspension according to Claim 1 or 2, in which the said damping structure includes walls (3, 4) forming a rigid enclosure (6) and opening at an aperture (7).

**4.** A system of suspension according to one of the preceding claims, in which the said aggregate includes balls made of synthetic material.

**5.** A system of suspension according to one of the preceding claims, in which the said structure (1) is elongated, and in which the said inner cavity (2) is formed longitudinally within the said elongated structure (1).

**6.** A system of suspension according to any one of the preceding claims, in which the said damping structure (1) further includes a resilient means (12) which exerts a pressure in order to constrain the said aggregate (8).

9

**7.** A system of suspension according to Claim 6, in which the resilient means (12) exerts a pressure on a rigid plate (11) closing the cavity (2).

**8.** A system of suspension according to any one of the preceding claims, in which the said aggregate (8) includes firm bodies (9A, 9B) made of different materials.

**9.** A system of suspension according to any one of the preceding claims, in which the said aggregate (8) includes firm bodies (9C, 9D, 9E, 9F) of different shapes.

**10.** A system of suspension according to any one of the preceding claims, in which the said aggregate (8) includes firm bodies (9C, 9D, 9E, 9F) of different sizes.

**11.** A system of suspension according to any one of the preceding claims, which further includes at least one inner partition (13) which is arranged inside the said inner cavity (2).

**12.** A system of suspension according to Claim 11, in which the said inner partition (13) is tubular in shape.

**13.** A system of suspension according to either of Claims 11 or 12, in which the said inner partition (13) is solid at least in certain parts.

**14.** A system of suspension according to one of Claims 11 to 13, in which the said inner partition (13) is pierced at least in certain parts.

**15.** A system of suspension according to any one of the preceding claims, in which the said aggregate (8) further comprises a viscous liquid filling the spaces between the said firm bodies (9).

**Patentansprüche**

**1.** Aufhängungssystem für ein Getriebegehäuse eines DrehflügelFlugzeugs, insbesondere eines Hubschraubers, wobei das Aufhängungssystem mehrere Tragstreben (15) aufweist, wobei mindestens eine der Tragstreben (15) eine Dämpfungsstruktur (1) mit einer inneren Aussparung (2) und mit Mitteln (10, 11) aufweist, um die innere Aussparung (2) zu verschließen, **dadurch gekennzeichnet, dass** die Struktur ein Aggregat (8) aufweist, das mindestens in Kontakt stehende hohle Festkörper (9) enthält und das die innere Aussparung füllt.

**2.** Aufhängungssystem nach Anspruch 1, bei dem das Aggregat die Aussparung (2) ganz ausfüllt.

**3.** Aufhängungssystem nach Anspruch 1 oder 2, bei dem die Dämpfungsstruktur Wände (3, 4) aufweist, die eine Umhüllung (6) bilden und in einer Öffnung (7) münden.

**4.** Aufhängungssystem nach einem der vorhergehenden Ansprüche, bei dem das Aggregat Kugeln aus Kunststoffmaterial aufweist.

**5.** Aufhängungssystem nach einem der vorhergehenden Ansprüche, bei dem die Struktur (1) länglich ist und bei dem die innere Aussparung (2) im Inneren der länglichen Struktur (1) in Längsrichtung ausgebildet ist.

**6.** Aufhängungssystem nach einem der vorhergehenden Ansprüche, bei dem die Dämpfungsstruktur (1) außerdem ein elastisches Mittel (12) aufweist, das einen Druck auf das Aggregat (8) ausübt, um es zu pressen.

**7.** Aufhängungssystem nach Anspruch 6, bei dem das elastische Mittel (12) auf eine die Aussparung (2) verschließende steife Platte (11) einen Druck ausübt.

**8.** Aufhängungssystem nach einem der vorhergehenden Ansprüche, bei dem das Aggregat (8) Festkörper (9A, 9B) aufweist, die aus verschiedenen Materialien hergestellt sind.

**9.** Aufhängungssystem nach einem der vorhergehenden Ansprüche, bei dem das Aggregat (8) Festkörper (9C, 9D, 9E, 9F) mit unterschiedlichen Formen aufweist.

10. Aufhängungssystem nach einem der vorhergehenden Ansprüche, bei dem das Aggregat (8) Festkörper (9C, 9D, 9E, 9F) mit unterschiedlichen Größen aufweist.

11. Aufhängungssystem nach einem der vorhergehenden Ansprüche, das außerdem mindestens eine innere Trennwand (13) aufweist, die innerhalb der inneren Aussparung (2) ausgebildet ist.

12. Aufhängungssystem nach Anspruch 11, bei dem die innere Trennwand (13) rohrförmig ist.

13. Aufhängungssystem nach einem der Ansprüche 11 oder 12, bei dem die innere Trennwand (13) zumindest teilweise massiv ist.

14. Aufhängungssystem nach einem der Ansprüche 11 bis 13, bei dem die innere Trennwand (13) zumindest teilweise durchbohrt ist.

15. Aufhängungssystem nach einem der vorhergehenden Ansprüche, bei dem das Aggregat (8) außerdem eine viskose Flüssigkeit aufweist, die die Zwischenräume zwischen den Festkörpern (9) füllt.

Fig. 1

Fig. 2

Fig. 3

Fig. 4

Fig. 5

Fig. 6

Fig. 7

Fig. 8

Fig. 9

Fig. 10

Fig. 11

FO(t) KA MA CB MB

x1(t) x2(t)

Fig. 12

EP 1 447 588 B1

Fig. 13